(19) Europäisches Patentamt / European Patent Office / Office européen des brevets

(11) **EP 4 686 910 A1**

(12) **DEMANDE DE BREVET EUROPEEN**

(43) Date de publication:
**04.02.2026 Bulletin 2026/06**

(21) Numéro de dépôt: **25188442.5**

(22) Date de dépôt: **09.07.2025**

(51) Classification Internationale des Brevets (IPC):
**G01B 15/06** (2006.01)   **G01N 23/046** (2018.01)

(52) Classification Coopérative des Brevets (CPC):
**G01B 15/06; G01N 23/046**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **30.07.2024 FR 2408417**

(71) Demandeur: **Airbus SAS**
**31700 Blagnac Cedex (FR)**

(72) Inventeurs:
• **PETIOT, Caroline**
  **31700 BLAGNAC (FR)**
• **BURTH, Jonas**
  **31700 BLAGNAC (FR)**
• **CHELAGHMA, Saber**
  **31700 BLAGNAC (FR)**
• **TEZEGHDANTI, Walid**
  **31700 BLAGNAC (FR)**

(74) Mandataire: **Gevers & Orès**
**Immeuble le Palatin 2**
**3 Cours du Triangle**
**CS 80165**
**92939 Paris La Défense Cedex (FR)**

(54) **PROCÉDÉ DE DÉTERMINATION DU CHAMP DE DÉFORMATION D'AU MOINS UNE COUCHE DE PEINTURE APPLIQUÉE SUR UN SUPPORT PENDANT UNE RÉTICULATION DE LA OU DES COUCHES DE PEINTURE**

(57)    - Procédé de détermination d'un champ de déformation d'au moins une couche de peinture appliquée sur un support pendant une réticulation de la ou des couches de peinture.
- Le procédé de détermination comprend une étape (E1) de mise à disposition d'un échantillon (1), une étape (E2) de mesure tomographique 3D de l'échantillon (1) et un ensemble d'étapes successives (S) répété itérativement comportant une étape (E3) d'analyse mécanique dynamique de l'échantillon (1) soumis à au moins un cycle de température (C), une étape (E4) de mesure tomographique 3D de l'échantillon (1), une étape (E5) de détermination d'un champ de déformation de chaque couche de peinture (3) de l'échantillon (1).

Fig. 1

## Description

### Domaine technique

La présente invention concerne un procédé de détermination du champ de déformation d'au moins une couche de peinture appliquée sur un support pendant une réticulation de la ou des couches de peinture.

### État de la technique

Un fuselage ou plus largement une structure d'aéronef, telle qu'une voilure, un empennage, etc.) peuvent comprendre différentes couches structurelles. Ces couches structurelles peuvent être métalliques ou, plus récemment, réalisées en matériau composite, par exemple à base de fibres de carbone.

Que le fuselage soit métallique ou composite, il est peint pour donner un aspect visuel particulier, mais aussi pour des raisons de protection contre les agressions extérieures.

Les fuselages composites et plus largement les structures principales composites d'aéronefs comprennent d'un empilement de plis de matériau composite à base de fibres de carbone. Une fois le fuselage composite ou la structure composite fabriqué, il est nécessaire de le peindre afin qu'il reflète les couleurs de la compagnie aérienne propriétaire de cet avion et qu'il soit protégé des agressions extérieures. Pour cela, on dépose sur le dernier pli, différentes couches de matériaux et de peinture.

Généralement, on peut appliquer sur le dernier pli du fuselage ou de la structure une première couche qui correspond à une couche de protection contre la foudre. Cette couche de protection contre la foudre comprend une feuille de cuivre anti-foudre qui est noyée dans un film polymère comportant des fibres de verre pour faciliter la manipulation et l'application de la feuille de cuivre.

Sur cette couche de protection contre la foudre, on peut appliquer une couche d'apprêt de base et une couche d'apprêt externe. Ces couches d'apprêt comprennent des pigments de céramique pour obtenir une couleur blanche sur laquelle on peut appliquer le logo de la compagnie aérienne.

Sur ces couches d'apprêt, on peut appliquer un revêtement intermédiaire qui favorise un décapage des couches dans le cas où il serait nécessaire de repeindre le fuselage ou la structure.

Enfin, sur le revêtement intermédiaire, on peut appliquer un revêtement de base puis un revêtement transparent qui apportent de la brillance au fuselage ou à la structure.

Ces différentes couches sont appliquées sur le dernier pli du fuselage ou de la structure après cuisson en autoclave et application préalable avant polymérisation de la couche de protection contre la foudre. Il est à préciser que la polymérisation du composite formant le fuselage ou la structure équipé de la couche de protection contre la foudre peut éventuellement présenter un état de contraintes résiduelles post-cuisson en raison d'une dissymétrie apportée dans l'édification du composite formant le fuselage ou la structure par l'ajout de la couche de protection contre la foudre et en fonction du cycle de refroidissement appliqué suite à la cuisson. L'application des couches après cuisson se fait sous forme de pulvérisation à température ambiante. Il est donc nécessaire d'attendre un certain temps, de l'ordre de plusieurs heures, entre l'application de chaque couche afin de permettre le séchage par polymérisation ou réticulation de chaque couche. Ainsi, le temps de cycles total pour peindre un aéronef est de l'ordre de trois semaines.

D'autres modes de réalisation sont envisageables pour appliquer les différentes couches comme des couches appliquées par moulage et compression.

L'aéronef est ensuite livré à la compagnie aérienne qui l'opère. L'aéronef est alors soumis à des cycles de températures allant en moyenne généralement de -55°C en vol à 85°C au sol. Or, il a parfois été observé que, lorsque l'aéronef est livré à la compagnie aérienne, la polymérisation ou la réticulation des différentes souches n'est pas finie. Chaque couche continue sa polymérisation ou sa réticulation indépendamment les unes des autres. Leurs propriétés respectives continuent d'évoluer étant donné que les chaînes moléculaires ne sont pas figées. Les couches ne sont donc pas dans une configuration thermostable quand l'aéronef est livré.

En conséquence, lors du vieillissement des couches, il peut apparaître des défauts sur la surface de fuselage ou de la structure car elles sont plus sensibles aux sollicitations thermiques, aux rayonnements ultraviolets, à l'eau ou à l'oxydation, ce qui accentue le vieillissement des couches. De plus, la libération de volatiles présents dans les couches durant le processus de réticulation ou de polymérisation augmente les contraintes internes aux couches, ce qui peut provoquer des craquelures, cloques, etc. dans les couches.

Il peut donc être important de comprendre les phénomènes en jeu pendant la réticulation ou la polymérisation des couches et notamment de détecter comment les couches évoluent pendant leur réticulation ou polymérisation. La compréhension de ces phénomènes permet de rechercher une amélioration du procédé d'application des couches et/ou à une amélioration de la formulation chimique des couches.

**Exposé de l'invention**

La présente invention a pour objet de proposer un procédé destiné à comprendre les phénomènes en jeu pendant la réticulation ou la polymérisation des couches et notamment de détecter comment les couches évoluent pendant leur réticulation ou polymérisation.

Pour cela, elle concerne un procédé de détermination d'un champ de déformation d'au moins une couche de peinture appliquée sur un support pendant une réticulation de la ou des couches de peinture.

Selon l'invention, le procédé de détermination comprend les étapes suivantes :

- une étape de mise à disposition d'un échantillon comportant le support et la ou les couches de peinture appliquées sur le support ;
- une première étape de mesure tomographique en trois dimensions de l'échantillon pour obtenir une première image en trois dimensions de l'échantillon ;
- un ensemble d'étapes successives répété itérativement jusqu'à ce que la différence entre un module de perte pour une itération courante et un module de perte obtenu pour une itération précédente soit inférieure ou égale à un seuil prédéterminé :

  • une étape d'analyse mécanique dynamique de l'échantillon soumis à au moins un cycle de température évoluant entre une température minimale prédéterminée et une température maximale prédéterminée, pour obtenir un module de perte de l'échantillon,
  • une deuxième étape de mesure tomographique en trois dimensions de l'échantillon pour obtenir une deuxième image en trois dimensions de l'échantillon,
  • une étape de détermination d'un champ de déformation de chaque couche de peinture de l'échantillon à partir de la première image et de la deuxième image, la première image de l'itération courante correspondant à la deuxième image de l'itération précédente.

Ainsi, grâce à la détermination du module de perte, on peut suivre l'évolution de la réticulation de la ou des couches de peinture tout en observant les déformations de la ou des couches de peintures à l'aide de mesures tomographiques. Le nombre de tests est donc limité à ce qui est nécessaire.

De plus, l'étape de détermination d'un champ de déformation comprend :

- une première sous-étape de détermination d'un champ de déplacement entre la première image et la deuxième image par une corrélation d'image volumique,
- une deuxième sous-étape de détermination d'un champ de déformation de la ou des couches de peinture à partir du champ de déplacement.

Avantageusement, la première sous-étape de détermination comprend le calcul de l'argument du minimum d'un champ de corrélation résiduel à partir de la relation suivante :

$$\phi_c^2 = \int_{\text{ROI}} \big[ g\big((x) + u(x)\big) - f(x) \big]^2 \mathrm{d}x,$$

dans laquelle :

*ROI* correspond à une région d'intérêt dans laquelle une analyse du champ de déplacement est réalisée,
x correspond aux coordonnées de n'importe quel voxel de la région d'intérêt,
*f(x)* correspond à un volume de niveau de gris dans la région d'intérêt de l'image de référence,
*g(x)* correspond à un volume de niveau de gris dans la région d'intérêt de l'image déformée,
*u(x)* correspond au champ de déplacement à déterminer,
$\phi_c$ correspond au champ de corrélation résiduel.

De plus, la deuxième sous-étape de détermination comprend le calcul de la dérivée du champ de déplacement pour obtenir le champ de déformation.

Par ailleurs, la première étape de mesure tomographique et la deuxième étape de mesure tomographique sont mises en œuvre par un dispositif de mesure par microtomographie aux rayons X.

En outre, l'étape d'analyse mécanique dynamique comprend la mise en œuvre de conditions aux limites mécaniques sur l'échantillon à une fréquence prédéterminée pendant que l'échantillon est soumis à au moins un cycle de température.

Par exemple, les conditions aux limites mécaniques sur l'échantillon correspondent à une flexion en trois points de l'échantillon à une fréquence de 1 Hz.

Par ailleurs, le cycle de température correspond à :

- une évolution progressive de température d'une température ambiante à la température maximale prédéterminée, puis
- un premier palier à la température maximale prédéterminée pendant une durée prédéterminée, puis
- une évolution progressive de température de la température maximale prédéterminée à la température minimale prédéterminée, puis
- un deuxième palier à la température minimale prédéterminée pendant une durée prédéterminée jusqu'à la fin du cycle de température.

De plus, le procédé comprend une étape d'analyse d'une évolution du champ de déformation de la ou des couches de peinture à partir du ou des champs de déformation déterminés pour chaque itération de mise en œuvre de l'ensemble d'étapes successives, l'étape d'analyse étant mise en œuvre après la dernière itération de l'ensemble d'étapes successives S.

**Brève description des figures**

Les figures annexées feront bien comprendre comment l'invention peut être réalisée. Sur ces figures, des références identiques désignent des éléments semblables.

La figure 1 représente schématiquement le procédé de détermination.
La figure 2 représente une coupe transversale d'un exemple d'échantillon.
La figure 3 représente une courbe d'évolution temporelle de température pendant un cycle de température.
La figure 4 représente une courbe d'évolution temporelle du module de perte.
La figure 5 représente à gauche une machine d'analyse mécanique dynamique comportant un échantillon et à droite un échantillon soumis à une contrainte à trois points dans la machine d'analyse mécanique dynamique.

**Description détaillée**

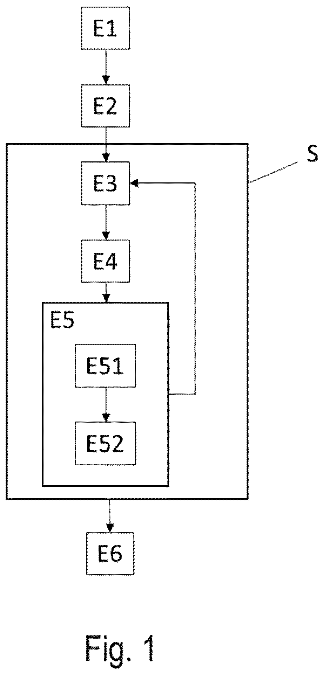

Le procédé de détermination d'un champ de déformation (ci-après appelé « procédé de détermination ») est représenté schématiquement sur la figure 1.

Le procédé de détermination correspond à un procédé de détermination du champ de déformation d'au moins une couche de peinture 3 appliquée sur un support 2 pendant une réticulation de la ou des couches de peinture 3. Ce procédé de détermination permet également d'observer l'évolution du champ de déformation. Le procédé de détermination comprend une étape E1 de mise à disposition d'un échantillon 1 comportant le support 2 et la ou les couches de peinture 3 appliquées sur le support 2. Pendant cette étape E1 de mise à disposition, un échantillon 1 représentatif de la ou des couches de peinture 3 et du support 2 d'une partie de structure est fabriqué. La partie de structure peut être un fuselage d'aéronef, ou une coque de bateau ou tout autre structure comportant au moins une couche de peinture appliquée sur un support.

Dans un mode de fabrication de l'échantillon 1, le support 2 correspond à un support composite comprenant trois plis comportant des fibres de carbone sensiblement parallèles entre elles pour pouvoir tenir une couche d'apprêt brillant et/ou une couche transparente.

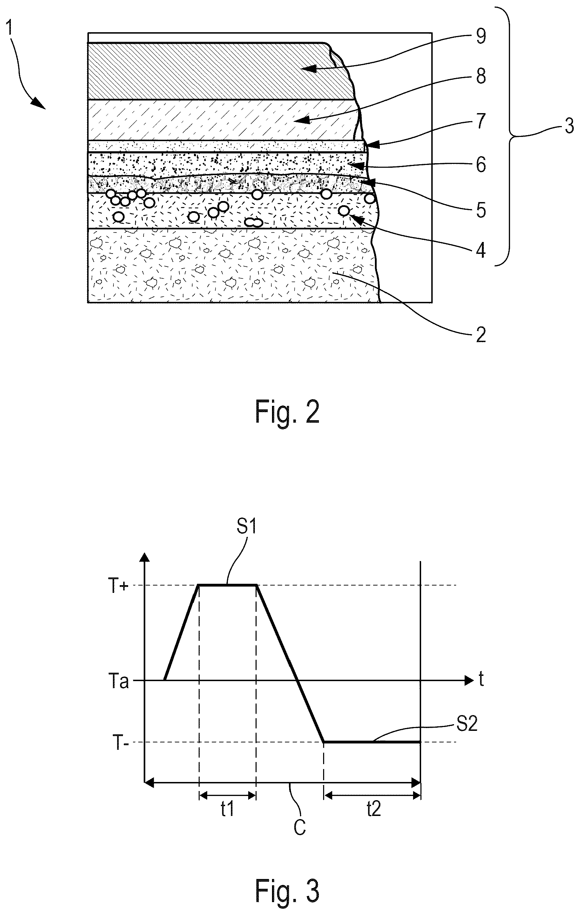

La figure 2 représente un exemple d'échantillon 1. Dans cet exemple, l'échantillon 1 mis à disposition comprend plusieurs couches 3 qui sont appliquées sur un support 2. L'échantillon 1 selon cet exemple comprend une première couche 4 qui correspond à une couche de protection contre la foudre (« lightning strike protection layer » an anglais). Cette couche de protection contre la foudre peut comprendre une feuille de cuivre anti-foudre qui est noyée dans un film polymère comportant des fibres de verre pour faciliter la manipulation et l'application de la feuille de cuivre. L'échantillon 1, selon l'exemple, comprend une deuxième couche 5 qui correspond à une couche d'apprêt de base (« basic primer layer » en anglais) et une troisième couche 6 qui correspond à une couche d'apprêt externe (« external primer layer » en anglais). La deuxième couche 5 et la troisième couche 6 sont appliquées sur la première couche 4. Elles comprennent des pigments de céramique pour obtenir une couleur blanche sur laquelle on peut appliquer le logo de la compagnie aérienne.

L'échantillon 1 selon l'exemple comprend une quatrième couche 7 appliquée sur la troisième couche 6. La quatrième couche 7 correspond à un revêtement intermédiaire (« intermediate coating » en anglais) qui favorise un décapage des couches dans le cas où il serait nécessaire de repeindre le fuselage ou la structure. Enfin, l'échantillon 1 selon l'exemple comprend une cinquième couche 8 et une sixième couche 9 appliquées sur la quatrième couche 7. La cinquième couche 8 et la sixième couche 9 correspondent à un revêtement de base et un revêtement transparent, respectivement. La cinquième couche 8 et la sixième couche 9 apportent de la brillance au fuselage ou à la structure.

Le procédé de détermination comprend en outre une première étape E2 de mesure tomographique en trois dimensions de l'échantillon 1 pour obtenir une première image en trois dimensions de l'échantillon 1. La première image en trois dimensions de l'échantillon 1 obtenue dans la première étape E2 de mesure tomographique peut correspondre à une image en trois dimensions en niveaux de gris. La différence entre niveaux de gris correspond à la différence de densité atomique des matériaux et donc aux différents matériaux des couches de peinture 3.

La première image obtenue dans la première étape E2 de mesure tomographique peut être stockée dans une mémoire.

La première étape E2 de mesure tomographique peut être mise en œuvre par un dispositif de mesure par microtomographie aux rayons X. Cette méthode de mesure est non-destructrice. Elle permet de numériser en voxels de niveaux de gris la microstructure d'un matériau via une image à trois dimensions. La première étape E2 de mesure tomographique permet d'obtenir la première image à trois dimensions qui correspond à une numérisation de référence de l'échantillon 1. Ainsi, dans cette première étape E2, la première image correspond à une image de référence dans laquelle la réticulation vient de commencer.

Le dispositif de mesure par microtomographie aux rayons X peut correspondre à un synchrotron à rayon X du « European Synchrotron Radiation Facility » (ESRF) à Grenoble ou à un tomographe à rayon X de laboratoire classique.

De plus, le procédé de détermination comprend un ensemble d'étapes successives S. Cet ensemble d'étapes successives S est répété itérativement jusqu'à ce qu'une différence (en valeur absolue) entre, d'une part, un module de perte de l'échantillon 1 pour une itération courante et, d'autre part, un module de perte de l'échantillon 1 obtenu pour une itération précédente soit inférieure ou égale à un seuil prédéterminé. Le seuil prédéterminé est déterminé pour indiquer que l'évolution du module de perte tend vers un plateau. En effet, plus la différence entre deux modules de perte de deux itérations successives est petite, plus l'évolution du module de perte tend vers un plateau. Par exemple, le seuil prédéterminé peut être sensiblement égal à zéro ou bien une valeur proche de zéro, ce qui signifie que le module de perte n'évolue sensiblement plus.

Chaque itération correspond à au moins un test réalisé sur l'échantillon 1.

L'ensemble d'étapes successives S comprend une étape E3 d'analyse mécanique dynamique de l'échantillon 1, une deuxième étape E4 de mesure tomographique et une étape E5 de détermination d'un champ de déformation de chaque couche de peinture 3.

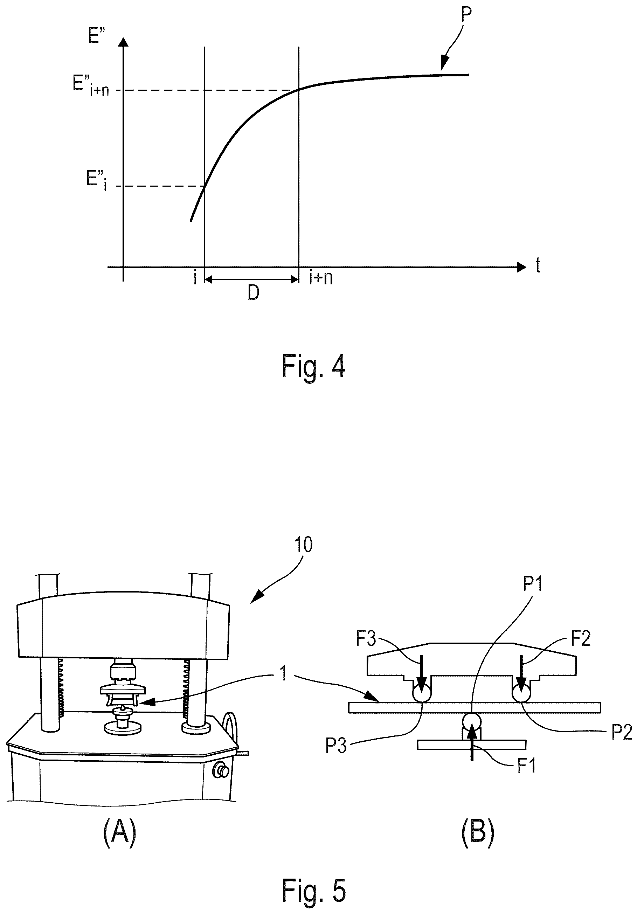

L'étape E3 d'analyse mécanique dynamique (DMA pour « dynamic mechanical analysis » en anglais) peut être mise en œuvre à l'aide d'une machine d'analyse mécanique dynamique 10 (dessin (A) de la figure 5). L'analyse mécanique dynamique est une technique permettant l'étude et la caractérisation des propriétés mécaniques de matériaux viscoélastiques, tels que les polymères, sous sollicitations dynamiques (contraintes) et thermiques. L'analyse mécanique dynamique permet de déterminer un module complexe E* de la forme : $E^* = E' + iE''$, dans lequel $E'$ correspond au module de conservation caractéristique de la réponse élastique du matériau analysé et $E''$ correspond au module de perte caractéristique de la réponse visqueuse du matériau analysé. Le module de perte est généralement exprimé en Pascal. Le module de perte peut être déterminé par un processeur à partir de mesures obtenues par la machine d'analyse mécanique dynamique 10.

La machine d'analyse peut correspondre à la DMA Q800 de TA Instruments ou à la DMA +1000 de Metravib.

Dans l'étape E3 d'analyse mécanique dynamique, l'échantillon 1 est soumis au moins à un cycle de température C évoluant entre une température minimale prédéterminée T- et une température maximale prédéterminée T+ pour obtenir le module de perte de l'échantillon 1. De façon non limitative, la température maximale prédéterminée T+ peut être comprise dans une plage entre 60°C et 70°C et la température minimale prédéterminée peut être comprise dans une plage entre - 40°C et -30°C. Les cycles de température peuvent être mis en œuvre selon une fréquence prédéterminée.

La figure 3 représente un exemple de cycle de température C. Dans cet exemple, le cycle de température C correspond à :

- une évolution progressive de température d'une température ambiante Ta (dans lequel se trouve l'échantillon 1 à l'état initial) à la température maximale prédéterminée T+, puis
- un premier palier S1 à la température maximale prédéterminée T+ pendant une durée prédéterminée t1, puis
- une évolution progressive de température de la température maximale prédéterminée T+ à la température minimale prédéterminée T-, puis
- un deuxième palier S2 à la température minimale prédéterminée T- pendant une durée prédéterminée t2 jusqu'à la fin du cycle de température C.

L'étape E3 d'analyse mécanique dynamique peut comprendre la mise en œuvre de conditions aux limites mécaniques sur l'échantillon 1 à une fréquence prédéterminée pendant que l'échantillon 1 est soumis à au moins un cycle de température C.

Les conditions aux limites mécaniques sur l'échantillon 1 peuvent correspondre à une flexion en trois points P1, P2, P3 de l'échantillon 1 à une fréquence de 1 Hz, comme représenté sur le dessin (B) de la figure 5. La flexion en trois points correspond à l'application d'une force F1 prédéterminée au point P1 et à l'application d'une force F2 au point P2 et d'une force F3 au point P3 de part et d'autre du point P1. Les forces F1, F2 et F3 sont colinéaires. La force F1 présente un sens inversé au sens des forces F2 et F3.

L'ensemble d'étapes successives S comprend en outre une deuxième étape E4 de mesure tomographique en trois dimensions de l'échantillon 1 pour obtenir une deuxième image en trois dimensions de l'échantillon 1. La deuxième étape E2 de mesure tomographique permet d'obtenir la deuxième image à trois dimensions qui correspond à une numérisation de l'échantillon 1 après l'étape E3 d'analyse mécanique dynamique. La deuxième image est donc sensiblement différente de la première image. La deuxième image obtenue dans la deuxième étape E4 de mesure tomographique peut être stockée dans une mémoire.

La deuxième étape E4 de mesure tomographique peut aussi être mise en œuvre à l'aide d'un dispositif de mesure par microtomographie aux rayons X. Le dispositif de mesure par microtomographie aux rayons X peut aussi correspondre à un synchrotron à rayon X du « European Synchrotron Radiation Facility » (ESRF) à Grenoble ou à un tomographe à rayon X de laboratoire classique.

L'ensemble d'étapes successives S comprend en outre une étape E5 de détermination d'un champ de déformation de chaque couche de peinture 3 de l'échantillon 1 à partir de la première image et de la deuxième image. L'étape E5 de détermination peut être mise en œuvre par un processeur.

La première image de l'itération courante de mise en œuvre de la suite d'étapes successives S correspond à la deuxième image de l'itération précédente de mise en œuvre de la suite d'étapes successives S.

Le champ de déformation pour chaque itération peut être stocké dans une mémoire. L'étape E5 de détermination d'un champ de déformation peut comprendre une première sous-étape E51 de détermination d'un champ de déplacement entre la première image et la deuxième image par une corrélation d'image volumique. L'étape E5 de détermination peut également comprendre une deuxième sous-étape E52 de détermination d'un champ de déformation de la ou des couches de peinture à partir du champ de déplacement.

La numérisation de l'échantillon 1 permet d'obtenir des niveaux de gris attribués à des voxels. Ainsi, en comparant un volume de référence $f(x)$ de la première image et un volume de référence $g(x)$ par corrélation volumique, il est possible de déterminer un champ de déplacement $u(x)$ entre les deux volumes. Le principe de corrélation d'images volumiques repose sur l'hypothèse de conservation des niveaux de gris. Ce déplacement de volumes permet d'obtenir un champ de déformation des différentes couches de peinture 3 de l'échantillon 1. Avantageusement, la première sous-étape E51 de détermination peut comprendre le calcul de l'argument du minimum d'un champ de corrélation résiduel à partir de la relation suivante :

$$\phi_c^2 = \int_{\text{ROI}} \big[ g\big((x) + u(x)\big) - f(x) \big]^2 \mathrm{d}x,$$

dans laquelle :

ROI correspond à une région d'intérêt dans laquelle une analyse du champ de déplacement est réalisée,
x correspond aux coordonnées de n'importe quel voxel de la région d'intérêt,
$f(x)$ correspond à un volume de niveau de gris dans la région d'intérêt de l'image de référence,
$g(x)$ correspond à un volume de niveau de gris dans la région d'intérêt de l'image déformée,
$u(x)$ correspond au champ de déplacement à déterminer,
$\phi_c$ correspond au champ de corrélation résiduel.

La deuxième sous-étape E52 de détermination peut comprendre le calcul de la dérivée du champ de déplacement pour obtenir le champ de déformation. Comme dit précédemment, l'ensemble d'étapes successives S est répété itérativement jusqu'à ce qu'une différence entre, d'une part, un module de perte de l'échantillon 1 pour une itération courante et, d'autre part, un module de perte de l'échantillon 1 obtenu pour une itération précédente soit inférieure ou égale à un seuil prédéterminé. En effet, le nombre d'itération est déterminé en fonction du module de perte qui est représentatif de la viscosité globale des couches de peintures 3 de l'échantillon 1 pour laquelle chaque couche de peinture 3 contribue. Lorsqu'un matériau arrive en fin de réticulation, le module de perte évolue très peu. Il est donc possible de surveiller l'évolution du comportement de l'échantillon 1 uniquement pendant la phase d'évolution du module de perte. C'est, en effet, durant ce laps de temps que les phénomènes générateurs de défaut apparaissent.

La figure 4 représente un exemple de courbe d'évolution du module de perte en fonction du temps. Pendant un temps D entre le temps i et le temps i+n, le module de perte évolue en augmentant de $E''_i$ à $E''_{i+1}$ pour arriver un plateau dans lequel le module de perte évolue très peu. Ainsi, en déterminant la différence entre, d'une part, un module de perte de l'échantillon 1 pour une itération courante et, d'autre part, un module de perte de l'échantillon 1 obtenu pour une itération précédente, il est possible de limiter le nombre d'itérations en fonction de l'évolution du module de perte.

Après la dernière itération de l'ensemble d'étapes successives S, le procédé de détermination peut comprendre une étape E6 d'analyse d'une évolution du champ de déformation de la ou des couches de peinture 3 à partir du ou des champs de déformation déterminés à l'étape E5 pour chaque itération de mise en œuvre de l'ensemble d'étapes successives S. L'étape E6 d'analyse peut être mise en œuvre par un processeur ou par un opérateur à partir du ou des champs de déformation qui peuvent être stockés dans la mémoire.

Le fait de pouvoir limiter le nombre d'itérations à l'aide du module de perte permet de répondre à une contrainte industrielle où le nombre de tests effectué doit rester pertinent vis-à-vis des contraintes temporelles et financières de fabrication d'un aéronef. Ainsi, il est possible de réaliser une série de cycles de température dans la machine d'analyse mécanique dynamique 10 et de construire l'évolution du module de perte (figure 4). Ceci permet de déterminer dans quelle plage se situe la phase d'évolution du module de perte et donc de déterminer le nombre de cycles de température strictement nécessaires. Les tests réalisés selon le procédé permettent d'obtenir une information beaucoup plus rapidement que des tests réalisés en conditions réelles.

Ainsi, en seulement deux ou trois itérations, il est possible de reconstruire le profil des différentes couches de peinture 3 de l'échantillon et d'analyser quelle ou quelles couches de peinture 3 sont à l'origine du défaut. En effet, grâce aux images obtenues, on détecte les niveaux de déformations des couches de l'échantillon 1 et on est capable de déterminer quand une déformation devient trop importante : dans ce cas, le niveau de sollicitation généré par cette déformation peut donner lieu à la création d'une fissure. L'analyse de l'évolution du champ de déformation peut contribuer à déterminer la ou les couches de peinture 3 responsables de l'origine d'un défaut apparaissant par la réticulation. Par exemple, une seule couche de peinture peut être à l'origine d'un défaut apparaissant sur une autre couche de peinture. Ainsi, l'analyse de l'évolution du champ de déformation permet de déterminer la couche de peinture à l'origine du défaut.

Suite à ce procédé de détermination, il est donc possible d'identifier la ou les couches de peinture 3 responsables du défaut et donc de :

- travailler sur le processus industriel de dépôt des couches de manière à supprimer ou limiter les déformations, ceci par une meilleure prise en compte de la réticulation des couches de peinture 3 : préconisation du temps de séchage, accélérateur de séchage, et/ou
- modifier la formulation chimique de la ou des couches de peinture 3 pour qu'elle adopte un comportement durant sa réticulation ne générant pas de déformations trop importantes, et/ou
- utiliser des couches de peinture 3 dont la réticulation est déjà avancée au moment du dépôt, et/ou
- utiliser un catalyseur accélérant la réticulation ou bien un moyen extérieur d'accélération comme par exemple des lampes de rayonnement UV.

On diminue ainsi le temps de fabrication, en ciblant la ou les couches nécessitant une action. De plus, ce procédé est facilement applicable à de nouveaux matériaux et permet d'obtenir, dès le premier aéronef, un résultat fiable.

**Revendications**

1. Procédé de détermination d'un champ de déformation d'au moins une couche de peinture (3) appliquée sur un support (2) pendant une réticulation de la ou des couches de peinture (3),
**caractérisé en ce qu'**il comprend les étapes suivantes :

   - une étape (E1) de mise à disposition d'un échantillon (1) comportant le support (2) et la ou les couches de peinture (3) appliquées sur le support (2) ;
   - une première étape (E2) de mesure tomographique en trois dimensions de l'échantillon (1) pour obtenir une première image en trois dimensions de l'échantillon (1) ;
   - un ensemble d'étapes successives (S) répété itérativement jusqu'à ce que la différence entre un module de perte pour une itération courante et un module de perte obtenu pour une itération précédente soit inférieure ou égale à un seuil prédéterminé :

      ◦ une étape (E3) d'analyse mécanique dynamique de l'échantillon (1) soumis à au moins un cycle de température (C) évoluant entre une température minimale prédéterminée (T-) et une température maximale prédéterminée (T+), pour obtenir un module de perte de l'échantillon (1),
      ◦ une deuxième étape (E4) de mesure tomographique en trois dimensions de l'échantillon (1) pour obtenir une deuxième image en trois dimensions de l'échantillon (1),
      ◦ une étape (E5) de détermination d'un champ de déformation de chaque couche de peinture (3) de l'échantillon (1) à partir de la première image et de la deuxième image, la première image de l'itération courante correspondant à la deuxième image de l'itération précédente.

**2.** Procédé selon la revendication 1,
**caractérisé en ce que** l'étape (E5) de détermination d'un champ de déformation comprend :

- une première sous-étape (E51) de détermination d'un champ de déplacement entre la première image et la deuxième image par une corrélation d'image volumique,
- une deuxième sous-étape (E52) de détermination d'un champ de déformation de la ou des couches de peinture à partir du champ de déplacement.

**3.** Procédé selon la revendication 2,

**caractérisé en ce que** la première sous-étape (E51) de détermination comprend le calcul de l'argument du minimum d'un champ de corrélation résiduel à partir de la relation suivante :

$$\phi_c^2 = \int_{\mathrm{ROI}} \bigl[g\bigl((x) + u(x)\bigr) - f(x)\bigr]^2 \mathrm{d}x,$$

dans laquelle :
*ROI* correspond à une région d'intérêt dans laquelle une analyse du champ de déplacement est réalisée,
*x* correspond aux coordonnées de n'importe quel voxel de la région d'intérêt,
*f(x)* correspond à un volume de niveau de gris dans la région d'intérêt de l'image de référence,
*g(x)* correspond à un volume de niveau de gris dans la région d'intérêt de l'image déformée,
*u(x)* correspond au champ de déplacement à déterminer,
$\phi_c$ correspond au champ de corrélation résiduel.

**4.** Procédé selon l'une des revendications 2 et 3,
**caractérisé en ce que** la deuxième sous-étape (E52) de détermination comprend le calcul de la dérivée du champ de déplacement pour obtenir le champ de déformation.

**5.** Procédé selon l'une des revendications 1 à 4,
**caractérisé en ce que** la première étape (E2) de mesure tomographique et la deuxième étape (E4) de mesure tomographique sont mises en œuvre par un dispositif de mesure par microtomographie aux rayons X.

**6.** Procédé selon l'une des revendications 1 à 5,
**caractérisé en ce que** l'étape (E3) d'analyse mécanique dynamique comprend la mise en œuvre de conditions aux limites mécaniques sur l'échantillon (1) à une fréquence prédéterminée pendant que l'échantillon (1) est soumis à au moins un cycle de température (C).

**7.** Procédé selon la revendication 6,
**caractérisé en ce que** les conditions aux limites mécaniques sur l'échantillon (1) correspondent à une flexion en trois points (P1, P2, P3) de l'échantillon (1) à une fréquence de 1 Hz.

**8.** Procédé selon l'une des revendications 1 à 6,
**caractérisé en ce que** le cycle de température (C) correspond à :

- une évolution progressive de température d'une température ambiante (Ta) à la température maximale prédéterminée (T+), puis
- un premier palier (S1) à la température maximale prédéterminée (T+) pendant une durée prédéterminée (t1), puis
- une évolution progressive de température de la température maximale prédéterminée (T+) à la température minimale prédéterminée (T-), puis
- un deuxième palier (S2) à la température minimale prédéterminée (T-) pendant une durée prédéterminée (t2) jusqu'à la fin du cycle de température (C).

**9.** Procédé selon l'une des revendications 1 à 8,
**caractérisé en ce qu'**il comprend une étape (E6) d'analyse d'une évolution du champ de déformation de la ou des couches de peinture (3) à partir du ou des champs de déformation déterminés pour chaque itération de mise en œuvre de l'ensemble d'étapes successives (S), l'étape (E6) d'analyse étant mise en œuvre suite après la dernière itération de l'ensemble d'étapes successives S.

Fig. 1

Fig. 2

Fig. 3

Fig. 4

(A)                                (B)

Fig. 5

Europäisches
Patentamt

European
Patent Office

Office européen
des brevets

## RAPPORT DE RECHERCHE EUROPEENNE

Numéro de la demande

EP 25 18 8442

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LENOIR N ET AL: "Volumetric digital image correlation applied to X-ray microtomography images from triaxial compression tests on argillaceous rock", STRAIN, BLACKWELL PUBLISHING LTD., MALDEN, MA, US, vol. 43, no. 3, 1 août 2007 (2007-08-01), pages 193-205, XP007916686, ISSN: 0039-2103, DOI: 10.1111/J.1475-1305.2007.00348.X [extrait le 2007-06-18] * le document en entier * ----- | 1-9 | INV. G01B15/06 G01N23/046 |
| A | ARKADIUSZ JANAS ET AL: "Shrinkage and mechanical properties of drying oil paints", HERITAGE SCIENCE, BIOMED CENTRAL LTD, LONDON, UK, vol. 10, no. 1, 3 novembre 2022 (2022-11-03), pages 1-10, XP021309679, DOI: 10.1186/S40494-022-00814-2 * abrégé * * Materials and methods; pages 2-4 * ----- | 1-9 | |

| DOMAINES TECHNIQUES RECHERCHES (IPC) |
|---|
| G01B G01N |

Le présent rapport a été établi pour toutes les revendications

| Lieu de la recherche | Date d'achèvement de la recherche | Examinateur |
|---|---|---|
| Munich | 2 décembre 2025 | Trique, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P04C02)